# EUROPÄISCHE PATENTSCHRIFT

(11) **EP 2 289 726 B1**
(45) Veröffentlichungstag und Bekanntmachung des Hinweises auf die Patenterteilung: **18.04.2018**
(21) Anmeldenummer: 10172895.4
(22) Anmeldetag: 16.08.2010
(51) Int. Cl.: B60J 7/20

(54) **Trenneinrichtung mit einer verstellbaren Trennwand zwischen Gepäckraum und Verdeckaufnahmeraum eines Kfz mit Falt- oder Klappverdeck**
Partition device with an adjustable partition wall between luggage compartment and canopy stow room of a motor vehicle with folding or collapsible roof
Dispositif de séparation doté d'une paroi de séparation réglable entre l'espace pour bagages et l'espace de réception de capote d'un véhicule automobile doté d'une capote pliante ou rabattable

(30) Priorität: 25.08.2009 DE 102009038833
(43) Veröffentlichungstag der Anmeldung: 02.03.2011
(73) Patentinhaber: Bayerische Motoren Werke Aktiengesellschaft, 80809 München (DE)
(72) Erfinder: Siring, Harald, 81377 Muenchen (DE)

(56) Entgegenhaltungen:
- EP-A2- 1 078 798
- EP-A2- 1 736 339
- DE-A1- 19 706 830
- DE-A1-102006 052 594
- DE-C1- 19 541 168

## Beschreibung

Die Erfindung betrifft eine Trenneinrichtung mit einer verstellbaren Trennwand zwischen Gepäckraum und Verdeckaufnahmeraum eines Kraftfahrzeugs mit Falt- oder Klappverdeck, mit den im Oberbegriff des Patentanspruches 1 angegebenen Merkmalen.

Eine derartige Trenneinrichtung weist in der DE 197 06 830 A1 drei gelenkig miteinander verbundene Plattenteile auf, die eine etwa parallele Höhenverlagerung des mittleren Plattenteiles ermöglichen, auf dem in einer Tieflage ein zusammen gefaltetes Falt- oder Klappverdeck eines Kraftfahrzeugs abzulegen ist. Bei geschlossenem Falt- oder Klappverdeck kann das mittlere Plattenteil in eine Hochlage verstellt werden, in der ein hinterer Gepäckraum nach vorne oben vergrößert ist. Das mittlere Plattenteil ist von einer vorgespannten Gasfeder in die Hochlage belastet, die ein manuelles Verstellen der Plattenteile in die Tieflage des mittleren Plattenteiles erheblich erschwert. Um einen Übertritt von Feuchtigkeit zwischen dem Gepäckraum und dem das zusammen gefaltete Falt- oder Klappverdeck aufnehmenden Aufnahmeraum zu verhindern, ist an der Durchtrittsöffnung zwischen dem Gepäckraum und dem Aufnahmeraum ein formveränderliches Sackteil befestigt. Die Trenneinrichtung weist mehrere Plattenteile und dazwischen Scharniere auf, die das Gewicht und die Fertigungskosten des Kraftfahrzeugs entsprechend erhöhen.

Ferner sind die Merkmale des Oberbegriffs von Patentanspruch 1 aus der EP 1736339 A2 bekannt.

Der Erfindung liegt die Aufgabe zu Grunde, eine Trenneinrichtung mit den Merkmalen im Oberbegriff des Patentanspruches 1 anzugeben, die wenige einfache Bauteile mit einem geringen Gewicht aufweist und ein manuelles Verstellen der Trenneinrichtung mit einer geringen Kraftanstrengung ermöglicht.

Diese Aufgabe ist durch die Merkmale im Patentanspruch 1 gelöst. Vorteilhafte Ausgestaltungen der Erfindung sind den Unteransprüchen entnehmbar.

Die erfindungsgemäße Trenneinrichtung an einem Kraftfahrzeug mit Falt- oder Klappverdeck, weist im Randbereich einer Durchgangsöffnung zwischen einem hinteren Gepäckraum und einem Verdeckaufnahmeraum eine manuell verstellbare Trennwand auf, die zwischen einer Gepäckraumvergrößerungslage und einer Verdeckaufnahmelage um eine Fahrzeugquerachse schwenkbar ist. Befindet sich die Trennwand in ihrer Verdeckaufnahmelage, kann das zusammen gefaltete Falt- oder Klappverdeck in den Verdeckaufnahmeraum eingebracht werden. In der Verdeckaufnahmelage steht die Trennwand von der Fahrzeugquerachse etwa senkrecht nach unten ab und verläuft im Wesentlichen in Fahrzeugquerrichtung. In der Gepäckraumvergrößerungslage ist die Trennwand etwa horizontal von der Fahrzeugquerachse nach vorne gerichtet angeordnet ist. In einem Abstand von der Fahrzeugquerachse sind an der Trennwand wenigstens zwei Federelemente, die als Blattfeder ausgebildet sind, angelenkt, die zumindest ab einer vorgegebenen Winkellage beim manuellen Verschwenken der Trennwand in die Gepäckraumvergrößerungslage oder in die Verdeckaufnahmelage die Trennwand in die Gepäckraumvergrößerungslage oder in die Verdeckaufnahmelage belasten. Das Federelement ist eine Übertotpunktfeder, die wechselweise jeweils etwa ab einer vorgegebenen Winkellage beim manuellen Verschwenken der Trennwand in die Gepäckraumvergrößerungslage die Trennwand in die beispielsweise von einem Anschlag begrenzte Gepäckraumvergrößerungslage und beim manuellen Verstellen der Trennwand in die beispielsweise von einem anderen Anschlag begrenzte Verdeckaufnahmelage die Trennwand in die Verdeckaufnahmelage belastet. Die Trennwand und das wenigstens eine Federelement weisen ein geringes Gewicht auf. Es ist deshalb nicht erforderlich, dass das Federelement einen wesentlichen Gewichtsausgleich beispielsweise an der Trennwand bewirkt. Das Federelement ist lediglich so eher gering gegenüber der Trennwand vorzuspannen, dass die Trennwand in ihrer Gepäckraumvergrößerungslage und/oder in der Verdeckaufnahmelage jeweils im Fahrbetrieb keine störenden, eventuell geräuschvollen Bewegungen ausführen kann. Ein Verstellen der Trennwand von der Verdeckaufnahmelage in die Gepäckraumvergrößerungslage kann durch einen einfachen kurzzeitigen manuellen Druck auf die Trennwand vom Fahrzeugheck her bewirkt werden, bis das vorgespannte Federelement beispielsweise nach Überwindung einer Totpunktlage ein weiteres Verstellen der Trennwand nach vorne oben in die Gepäckraumvergrößerungslage bewirkt. Ein Rückstellen der Trennwand von der Gepäckraumvergrößerungslage in die Verdeckaufnahmelage kann durch eine einfache kurzzeitige manuelle Zugkraft an der Trennwand erfolgen, bis das vorgespannte Federelement beispielsweise nach dem Überschreiten einer Totpunktlage ein weiteres Verstellen der Trennwand in die Verdeckaufnahmelage bewirkt. Beispielsweise in diesen Fällen ist ein separates Griffteil nicht erforderlich. Selbstverständlich ist es möglich, an der Trennwand beispielsweise eine Griffmulde vorzusehen, in die eine Bedienhand eingreifen kann, die beispielsweise an der Trennwand eine Zugkraft bewirkt.

Ein Ausführungsbeispiel der Erfindung wird anhand einer Zeichnung näher erläutert. Es zeigen
- Fig. 1: die Trenneinrichtung in einer vereinfachten perspektivischen Ansicht, in der sich die Trennwand in ihrer Gepäckraumvergrößerungslage befindet,
- Fig. 2: eine Fig. 1 entsprechende Ansicht bei in der Verdeckaufnahmelage befindlicher Trennwand und

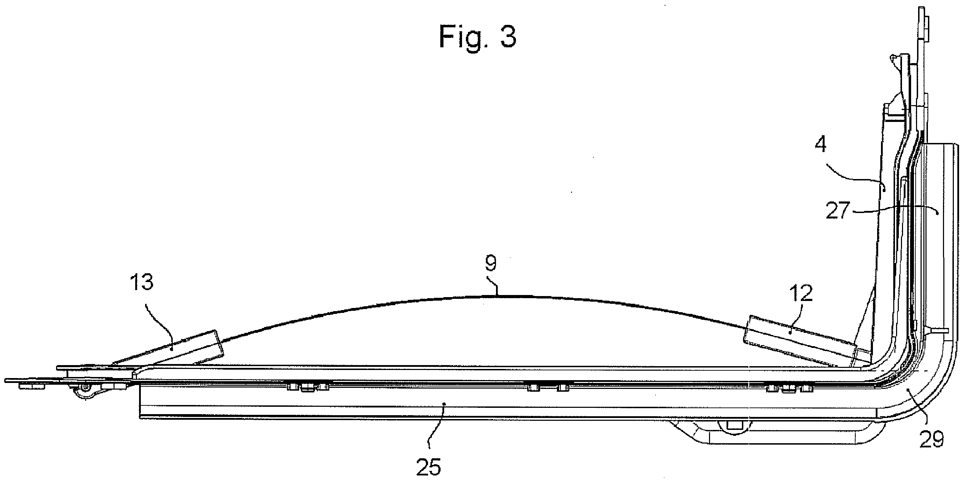

- Fig. 3: die in Fig. 2 dargestellte Trenneinrichtung in einer Seitenansicht.

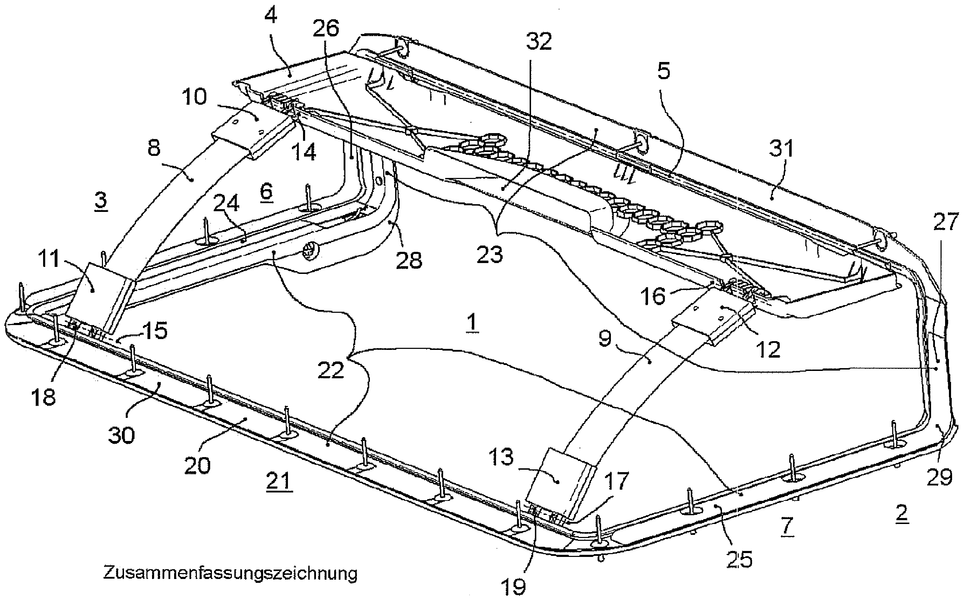

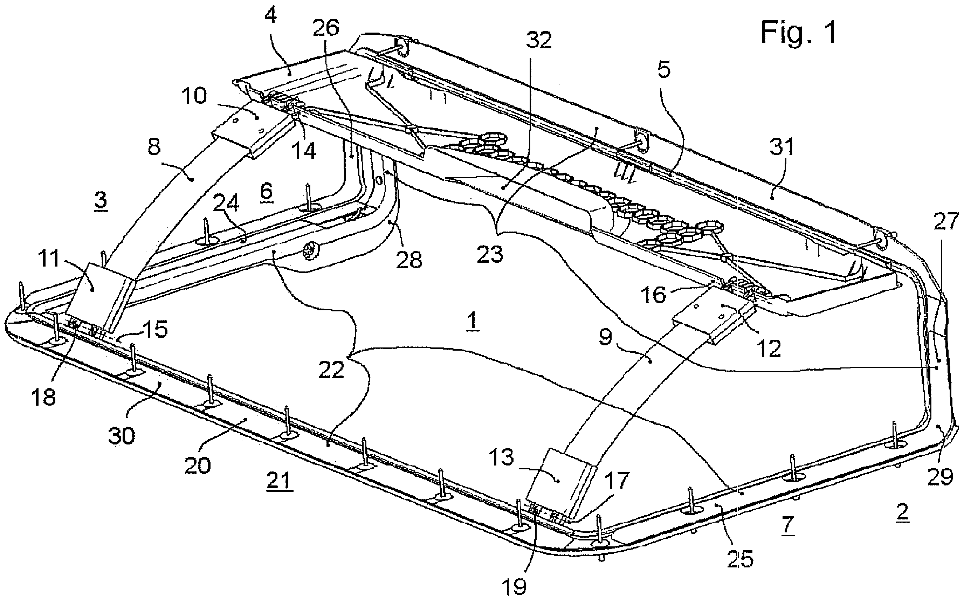

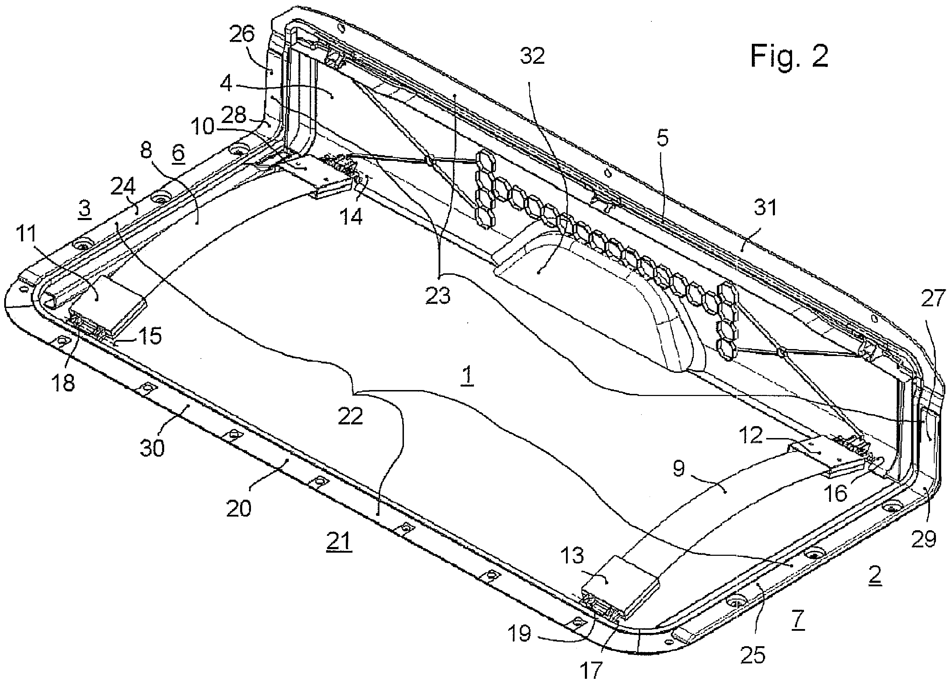

In Figur 1 ist eine Trenneinrichtung an einem Kraftfahrzeug mit einem nicht abgebildeten Falt- oder Klappverdeck vereinfacht perspektivisch dargestellt, die im Randbereich einer Durchgangsöffnung 1 zwischen einem hinteren Gepäckraum 2 und einem Verdeckaufnahmeraum 3 eine Trennwand 4 aufweist, die zwischen einer in Fig. 1 dargestellten Gepäckraumvergrößerungslage und einer in Fig. 2 dargestellten Verdeckaufnahmelage um eine Fahrzeugquerachse 5 schwenkbar ist. In der in Fig. 2 dargestellten Verdeckaufnahmelage, in der die Trennwand 4 von der Fahrzeugquerachse 5 etwa senkrecht nach unten absteht und im Wesentlichen in Fahrzeugquerrichtung verläuft, ist das nicht abgebildete, zusammen gefaltete Falt- oder Klappverdeck in den Verdeckaufnahmeraum 3 einzubringen, wobei es dann an seitlich außen neben der Durchgangsöffnung 1 befindlichen Karosseriewänden zumindest bereichsweise aufliegt. In der in Fig. 1 dargestellten Gepäckraumvergrößerungsfage der Trennwand 4 ist die Trennwand 4 etwa horizontal angeordnet und verläuft etwa von der Fahrzeugquerachse 5 nach vorne.

In einem Abstand von der Fahrzeugquerachse 5 sind an seitlich symmetrisch gegenüber liegenden Bereichen an der Trennwand 4 zwei vorgespannte Federelemente 8, 9 angelenkt, die jeweils etwa ab einer vorgegebenen Winkellage beim manuellen Verschwenken der Trennwand 4 von der in Fig. 2 dargestellten Verdeckaufnahmelage in die Fig. 1 entsprechende Gepäckraumvergrößerungslage die Trennwand 4 in die Gepäckraumvergrößerungslage und beim manuellen Verstellen der Trennwand 4 von der Fig. 1 entsprechenden Gepäckraumvergrößerungslage in die in Fig. 2 dargestellte Verdeckaufnahmelage die Trennwand 4 in die Verdeckaufnahmelage belasten.

Die Federelemente 8, 9 sind jeweils durch eine biegsame Blattfeder gebildet, die bei dem Ausführungsbeispiel an jedem Stirnbereich mit einem zugeordneten Kopfteil 10, 11 bzw. 12, 13 verbunden sind, die jeweils um eine zugeordnete, zur Fahrzeugquerachse 5 einen parallelen Abstand aufweisende Achsen 14, 16 einerseits an der Trennwand 4 und andererseits mit dem anderen Stirnbereich an einem im vorderen Randbereich der Durchgangsöffnung 1 angeordneten Stützelement 18, 19 schwenkbar befestigt sind.

In der Fig. 2 entsprechenden Verdeckaufnahmelage der Trennwand 4 sind die der Trennwand 4 zugeordneten Achsen 14, 16 jeweils im unteren Bereich der Trennwand 4 angeordnet bzw. ausgebildet. Der Randbereich der Durchgangsöffnung 1 ist von einem Rahmenteil 20 begrenzt, das über den gesamten Umfang der Durchgangsöffnung 1 verläuft. Zwischen dem Rahmenteil 20 und einer die Durchgangsöffnung 1 aufweisenden Karosseriewand 21 ist eine nicht abgebildete Dichtung angeordnet.

Im Randbereich der Durchgangsöffnung 1 oder an dem daran befestigten Rahmenteil 20 oder an einem mit dem Rahmenteil oder dem Randbereich verbindbaren Befestigungsrahmen ist ein nicht dargestelltes formveränderliches Sackteil befestigt, das den Gepäckraum 2 vom Verdeckaufnahmeraum 3 weitgehend feuchtigkeitsdicht trennt und zumindest bereichsweise von der Trennwand 4 verstellbar ist, wenn die Trennwand 4 von der Verdeckaufnahmelage in die Gepäckraumvergrößerungslage verstellt wird und dabei das Sackteil bereichsweise an der Trennwand 4 anliegt oder zur Anlage kommt.

Das Rahmenteil 20 weist zwei entgegen gesetzt angeordnete U-förmige Bereiche 22, 23 auf, von denen ein U-förmiger Bereich 22 mit nach hinten gerichteten Schenkeln 24, 25 etwa horizontal angeordnet und der andere U-förmige Bereich 23 mit nach unten gerichteten Schenkeln 26, 27 angeordnet und seine Schenkel 26, 27 in jeweils einem Eckbereich 28, 29 mit dem jeweils zugewandten Schenkel 24, 25 des horizontalen U-förmigen Bereiches 22 verbunden sind.

Die eine Schwenkachse für die Trennwand 4 bildende Fahrzeugquerachse 5 ist im Bereich der Basis 30 des etwa vertikalen U-förmigen Bereiches 22 des Rahmenteiles 20 ausgebildet. Die Trennwand 4 befindet sich in ihrer Fig. 2 entsprechenden Verdeckaufnahmelage im Wesentlichen zwischen den etwa vertikalen Schenkeln 26, 27 des etwa vertikalen U-förmigen Bereiches 23 des Rahmenteiles 20, das im Randbereich der Durchgangsöffnung 1 angeordnet ist.

Die Trennwand 4 liegt in ihrer Verdeckaufnahmelage und in ihrer Gepäckraumvergrößerungslage jeweils an einem nicht dargestellten ortsfesten Anschlag an und ist von den vorgespannten Federelementen 8, 9 wechselweise gegen den betreffenden Anschlag belastet.

In ihrer entspannten Lage sind die als Blattfedern ausgebildeten Federelemente 8, 9 eben oder gekrümmt ausgebildet. Bei dem Ausführungsbeispiel sind in der Verdeckaufnahmelage der Trennwand 4 die Endbereiche der Blattfedern 8, 9 etwa in einer gleichen Höhenlage einerseits am vorderen Randbereich der Durchgangsöffnung 1 und andererseits an dem unteren Bereich der Trennwand 4 angeordnet. Dazwischen sind die Blattfedern 8, 9 etwas nach oben konvex gekrümmt und dadurch vorgespannt.

Ist die Trennwand 4 gemäß Fig. 1 nach vorne oben in die etwa horizontale Gepäckraumvergrößerungslage geschwenkt, sind die Blattfedern 8, 9 nach vorne oben konvex gekrümmt. Aus den Figuren geht nicht hervor, dass in der Fig. 1 entsprechenden Gepäckraumvergrößerungslage die Blattfedern 8, 9 gegenüber den konvexen Krümmungen der Blattfedern 8, 9 in der Fig. 2 entsprechenden Verdeckaufnahmelage wesentlich stärker konvex gekrümmt sind. Der Grund hierfür ist, dass die Abstände zwischen den Achsen 14 und 15 bzw. 16 und 17 in der Fig. 1 entsprechenden Gepäckraumvergrößerungslage der Trennwand 4 wesentlich geringer sind als die Abstände dieser Achsen 14, 15 bzw. 16, 17, wenn sich die Trennwand 4 in ihrer Fig. 2 entsprechenden Verdeckaufnahmelage befindet. Dies ist nützlich, da dadurch in der Fig. 1 entsprechenden Gepäckraumvergrößerungslage in einem größeren Bereich höhere Gepäckstücke unter den Blattfedern 8, 9 anzuordnen sind.

Bei dem Ausführungsbeispiel ist im unteren mittleren Bereich der in der Verdeckaufnahmelage befindlichen Trennwand 4 eine Griffmulde 32 ausgebildet, die einen manuellen Eingriff einer Bedienhand in die Griffmulde 32 beispielsweise in der Fig. 1 entsprechenden Gepäckraumvergrößerungslage der Trennwand 4 ermöglicht, die beispielsweise an der Trennwand 4 eine Zugkraft in Richtung der in Fig. 2 dargestellten Verdeckaufnahmelage bewirkt. Ist dabei die Trennwand 4 derart verschwenkt, dass die Blattfedern 8, 9 jeweils ihre Totpunktlage überschritten haben, wird ein weiteres Verschwenken der Trennwand 4 in Richtung der in Fig. 2 dargestellten Verdeckaufnahmelage über die vorgespannten Blattfedern 8, 9 bewirkt.

Die Erfindung ist von dem Ausführungsbeispiel abweichend ausführbar. Die Erfindung erfordert lediglich eine einzige Trennwand, die ein- oder mehrteilig ausgebildet sein kann. Bei dem Ausführungsbeispiel ist die Trennwand mehrteilig ausgebildet, wobei ein die Trennwand abdeckendes Abdeckteil in den Figuren nicht dargestellt ist.

## Patentansprüche

1. Trenneinrichtung an einem Kraftfahrzeug mit Falt- oder Klappverdeck, mit einer im Randbereich einer Durchgangsöffnung von einem hinteren Gepäckraum zu einem Verdeckaufnahmeraum (3) zwischen einer Gepäckraumvergrößerungslage und einer Verdeckaufnahmelage um eine Fahrzeugquerachse (5) schwenkbaren Trennwand (4), die in der Verdeckaufnahmelage, in der das Falt- oder Klappverdeck in den Verdeckaufnahmeraum einzubringen ist, von der Fahrzeugquerachse (5) etwa senkrecht nach unten in Fahrzeugquerrichtung und in der Gepäckraumvergrößerungslage etwa horizontal von der Fahrzeugquerachse (5) nach vorne angeordnet ist, **dadurch gekennzeichnet, dass** in einem Abstand von der Fahrzeugquerachse (5) an der Trennwand (4) zwei Federelemente (8, 9), die als biegsame Blattfedern ausgebildet sind, angelenkt sind, die zumindest ab einer vorgegebenen Winkellage beim manuellen Verschwenken der Trennwand (4) in die Gepäckraumvergrößerungslage oder in die Verdeckaufnahmelage die Trennwand (4) in die Gepäckraumvergrößerungslage oder in die Verdeckaufnahmelage belasten , wobei die zwei Federelemente (8, 9) jeweils in einem zugeordneten Seitenbereich der Trennwand (4) angeordnet sind, und wobei ein mit einem Stirnbereich jedes Federelements (8, 9) verbundenes Kopfteil (10, 12) um eine zur Fahrzeugquerachse (5) einen parallelen Abstand aufweisende Achse (14, 16) an der Trennwand (4) schwenkbar angelenkt ist und ein anderes mit einem anderen Stirnbereich jedes Federelements (8, 9) verbundenes Kopfteil (11, 13) um eine zur Fahrzeugquerachse (5) bzw. Achse (14, 16) etwa parallele Schwenkachse (15, 17) an der Karosserie des Kraftfahrzeugs oder an einem im Randbereich (20) der Durchgangsöffnung (1) angeordneten Stützelement (18, 19) schwenkbar angeordnet ist.

2. Trenneinrichtung nach Anspruch 1, **dadurch gekennzeichnet, dass** in einem Abstand von der Fahrzeugquerachse (5) an der Trennwand (4) die Federelemente (8, 9) angelenkt sind, die jeweils etwa ab einer vorgegebenen Winkellage beim manuellen Verschwenken der Trennwand (4) in die Gepäckraumvergrößerungslage die Trennwand (4) in die Gepäckraumvergrößerungslage und beim manuellen Verstellen der Trennwand (4) in die Verdeckaufnahmelage die Trennwand (4) in die Verdeckaufnahmelage belasten.

3. Trenneinrichtung nach Anspruch 1 oder 2, **dadurch gekennzeichnet, dass** bei in der Verdeckaufnahmelage befindlicher Trennwand (4) die Achse (14, 16) im unteren Bereich der Trennwand (4) angeordnet bzw. ausgebildet ist.

4. Trenneinrichtung nach einem der Ansprüche 1 bis 3, **dadurch gekennzeichnet, dass** der Randbereich der Durchgangsöffnung (1) von einem Rahmenteil (20) begrenzt ist, das über den gesamten Umfang oder wenigstens einen Umfangsbereich jeweils der Durchgangsöffnung (1) verläuft, oder zusätzlich zwischen dem Rahmenteil (20) und einer die Durchgangsöffnung (1) aufweisenden Karosseriewand (21) oder einem Befestigungsrahmen oder zwischen dem Befestigungsrahmen und der die Durchgangsöffnung aufweisenden Karosseriewand eine Dichtung angeordnet ist.

5. Trenneinrichtung nach einem der Ansprüche 1 bis 4, **dadurch gekennzeichnet, dass** im Randbereich der Durchgangsöffnung (1) oder an dem daran befestigten Rahmenteil (20) oder an einem mit dem Rahmenteil oder dem Randbereich verbindbaren Befestigungsrahmen ein formveränderliches Sackteil befestigt ist, das den Gepäckraum (2) vom Verdeckaufnahmeraum (3) weitgehend feuchtigkeitsdicht trennt und zumindest bereichsweise von der Trennwand (4) verstellbar ist, wenn die Trennwand (4) von der Verdeckaufnahmelage in die Gepäckraumvergrößerungslage verstellt wird und dabei das Sackteil bereichsweise an der Trennwand (4) anliegt oder zur Anlage kommt.

6. Trenneinrichtung nach einem der Ansprüche 4 oder 5, **dadurch gekennzeichnet, dass** das Rahmenteil (20) über den gesamten Umfang der Durchgangsöffnung (1) verläuft und zwei entgegen gesetzt angeordnete U-förmige Bereiche (22, 23) aufweist, von denen ein U-förmiger Bereich (22) mit nach hinten gerichteten Schenkeln (24, 25) etwa horizontal angeordnet und der andere U-förmige Bereich (23) mit nach unten gerichteten Schenkeln (26, 27) angeordnet und seine Schenkel (26, 27) mit dem jeweils zugewandten Schenkel (24, 25) des horizontalen U-förmigen Bereiches (22) verbunden sind.

7. Trenneinrichtung nach Anspruch 6, **dadurch gekennzeichnet, dass** die Fahrzeugquerachse (5) im Bereich der Basis (31) des etwa vertikalen U-förmigen Bereiches (23) des Rahmenteiles (20) ausgebildet ist und sich die Trennwand (4) in ihrer Verdeckaufnahmelage im Wesentlichen zwischen den etwa vertikalen Schenkeln (26, 27) dieses U-förmigen Bereiches (23) des Rahmenteiles (20) befindet.

8. Trenneinrichtung nach einem der Ansprüche 1 bis 7, **dadurch gekennzeichnet, dass** die Trennwand (4) in ihrer Verdeckaufnahmelage und in ihrer Gepäckraumvergrößerungslage jeweils an einem ortsfesten Anschlag anliegt und von den vorgespannten Federelementen (8, 9) wechselweise gegen den betreffenden Anschlag belastet ist.

9. Trenneinrichtung nach einem der Ansprüche 1 bis 8, **dadurch gekennzeichnet, dass** die Federelemente (8, 9) eben oder gekrümmt ausgebildet sind und in der Verdeckaufnahmelage der Trennwand (4) die Federelemente (8, 9) mit etwa in gleicher Höhenlage befindlichen Endbereichen zwischen dem vorderen Randbereich (30) der Durchgangsöffnung (1) und dem unteren Bereich der Trennwand (4) verlaufen und nach oben konvex gekrümmt sind.

10. Trenneinrichtung nach einem der Ansprüche 1 bis 9, **dadurch gekennzeichnet, dass** die Federelemente (8, 9) in der nach vorne oben geschwenkten etwa horizontalen Gepäckraumvergrößerungslage der Trennwand (4) nach vorne oben konvex gekrümmt sind, oder zusätzlich die Federelemente (8, 9) in dieser Lage gegenüber der Lage der Federelemente (8, 9) stärker gekrümmt sind, in der sich die Trennwand (4) in ihrer Verdeckaufnahmelage befindet.

11. Trenneinrichtung nach einem der Ansprüche 1 bis 10, **dadurch gekennzeichnet, dass** im unteren mittleren Bereich der in der Verdeckaufnahmelage befindlichen Trennwand (4) eine Griffmulde (32) ausgebildet ist, die einen manuellen Eingriff einer Bedienhand in die Griffmulde (32) in der Gepäckraumvergrößerungslage der Trennwand (4) und damit eine von der Bedienhand bewirkte Zugkraft an der Trennwand (4) in Richtung der Verdeckaufnahmelage der Trennwand (4) ermöglicht.

## Claims

1. A separating means on a motor vehicle with a convertible or folding top, having a partition (4) in the edge region of a through-opening from a rear luggage compartment to a top-receiving space (3) which is pivotable about a transverse vehicle axis (5) between a luggage-compartment enlargement position and a top-receiving position, which partition in the top-receiving position, in which the convertible or folding top is to be brought into the top-receiving space, is arranged approximately vertically downwards from the transverse vehicle axis (5) in the transverse direction of the vehicle and in the luggage-compartment enlargement position is arranged approximately horizontally from the transverse vehicle axis (5) towards the front, **characterised in that** two spring elements (8, 9), which are designed as flexible leaf springs, are articulated on the partition (4) at a distance from the transverse vehicle axis (5), which elements at least from a specified angular position onwards upon manual pivoting of the partition (4) into the luggage-compartment enlargement position or into the top-receiving position load the partition (4) into the luggage-compartment enlargement position or into the top-receiving position, with the two spring elements (8, 9) being arranged in each case in an associated side region of the partition (4), and a head part (10, 12) which is connected to an end region of each spring element (8, 9) being pivotably articulated on the partition (4) about an axis (14, 16) which is spaced apart in parallel from the transverse vehicle axis (5), and a different head part (11, 13) which is connected to another end region of each spring element (8, 9) is arranged pivotably on the body of the motor vehicle or on a supporting element (18, 19) arranged in the edge region (20) of the through-opening (1) about a pivot axis (15, 17) approximately parallel to the transverse vehicle axis (5) or axis (14, 16).

2. A separating means according to Claim 1, **characterised in that** the spring elements (8, 9) are articulated on the partition (4) at a distance from the transverse vehicle axis (5), which elements in each case approximately from a specified angular position onwards upon manual pivoting of the partition (4) into the luggage-compartment enlargement position load the partition (4) into the luggage-compartment enlargement position, and upon manual displacement of the partition (4) into the top-receiving position load the partition (4) into the top-receiving position.

3. A separating means according to Claim 1 or Claim 2, **characterised in that** when the partition (4) is in the top-receiving position the axis (14, 16) is arranged or formed in the lower region of the partition (4).

4. A separating means according to one of Claims 1 to 3, **characterised in that** the edge region of the through-opening (1) is delimited by a frame part (20) which runs over the entire periphery, or at least one peripheral region in each case, of the through-opening (1), or additionally a seal is arranged between the frame part (20) and a body panel (21) which bears the through-opening (1) or a fastening frame, or between the fastening frame and the body panel which bears the through-opening.

5. A separating means according to one of Claims 1 to 4, **characterised in that** a bag part of changeable shape is fastened in the edge region of the through-opening (1) or on the frame part (20) which is fastened thereto or on a fastening frame which can be connected to the frame part or the edge region, which bag part separates the luggage compartment (2) from the top-receiving space (3) in largely moisture-tight manner and at least in regions is displaceable by the partition (4) if the partition (4) is shifted from the top-receiving position into the luggage-compartment enlargement position and in so doing the bag part lies or comes to lie against the partition (4) in regions.

6. A separating means according to one of Claims 4 or 5, **characterised in that** the frame part (20) runs over the entire periphery of the through-opening (1) and has two U-shaped regions (22, 23) arranged in opposite directions, of which one U-shaped region (22) is arranged approximately horizontally with rearwards-directed arms (24, 25) and the other U-shaped region (23) is arranged with downwards-directed arms (26, 27) and its arms (26, 27) are connected to the facing arm (24, 25) in each case of the horizontal U-shaped region (22).

7. A separating means according to Claim 6, **characterised in that** the transverse vehicle axis (5) is formed in the region of the base (31) of the approximately vertical U-shaped region (23) of the frame part (20), and the partition (4) in its top-receiving position is located substantially between the approximately vertical arms (26, 27) of this U-shaped region (23) of the frame part (20).

8. A separating means according to one of Claims 1 to 7, **characterised in that** the partition (4) in its top-receiving position and in its luggage-compartment enlargement position lies in each case against a fixed stop and is loaded by the pre-tensioned spring elements (8, 9) alternately against the relevant stop.

9. A separating means according to one of Claims 1 to 8, **characterised in that** the spring elements (8, 9) are designed to be flat or curved and in the top-receiving position of the partition (4) the spring elements (8, 9) with end regions located approximately at the same vertical position run between the front edge region (30) of the through-opening (1) and the lower region of the partition (4) and are curved convexly upwards.

10. A separating means according to one of Claims 1 to 9, **characterised in that** the spring elements (8, 9) in the approximately horizontal luggage-compartment enlargement position of the partition (4) which is pivoted towards the front and upwards are convexly curved towards the front and upwards, or additionally the spring elements (8, 9) in this position are more greatly curved compared with the position of the spring elements (8, 9) in which the partition (4) is in its top-receiving position.

11. A separating means according to one of Claims 1 to 10, **characterised in that** a recessed grip (32) is formed in the lower middle region of the partition (4) which is in the top-receiving position, which grip makes possible manual engaging of an operating hand in the recessed grip (32) in the luggage-compartment enlargement position of the partition (4) and hence a tractive force, brought about by the operating hand, on the partition (4) in the direction of the top-receiving position of the partition (4).

## Revendications

1. Dispositif de séparation destiné à un véhicule équipé d'un capot repliable ou rabattable comprenant une paroi de séparation (4) susceptible de pivoter autour d'un axe transversal du véhicule (5) dans la zone de bord d'une ouverture de passage entre un volume de bagages arrière et un volume de réception du capot (3) entre une position augmentant le volume de bagages et une position de réception du capot, et qui est située dans la position de réception du capot dans laquelle le capot repliable ou rabattable doit être inséré dans le volume de réception du capot, essentiellement verticalement vers le bas par rapport à l'axe transversal du véhicule (5) dans la direction transversale du véhicule, et dans la position augmentant le volume de bagages, essentiellement horizontalement vers l'avant par rapport à l'axe transversal du véhicule, **caractérisé en ce qu'**
à distance de l'axe transversal du véhicule (5), sont articulés sur la paroi de séparation (4) deux éléments élastiques (8, 9) réalisés sous la forme de ressorts à lames flexibles, qui rappellent élastiquement, au moins à partir d'une position angulaire prédéfinie, par pivotement manuel de la paroi de séparation (4), dans la position augmentant le volume de bagages ou dans la position de réception du capot, cette paroi de séparation (4) dans la position augmentant le volume de bagages ou dans la position de réception du capot, les deux éléments élastiques (8, 9) étant chacun montés dans une zone latérale associée de la paroi de séparation (4), et, une pièce de tête (10, 12) reliée à la zone frontale de chaque élément élastique (8, 9) étant articulée de façon à pouvoir pivoter sur la paroi de séparation (4) autour d'un axe (14, 16) parallèle à l'axe transversal du véhicule (5) et situé à distance de cet axe et une autre pièce de tête (11, 13) reliée à l'autre zone frontale de chaque élément élastique (8, 9) étant montée pivotante sur la carrosserie du véhicule ou sur un élément d'appui (18, 19) monté dans la zone de bord (20) de l'ouverture de passage (1) autour d'un axe de pivotement (15, 17) essentiellement parallèle à l'axe transversal du véhicule (5) ou à l'axe (14, 16).

2. Dispositif de séparation conforme à la revendication 1,
**caractérisé en ce qu'**
à distance de l'axe transversal (5) du véhicule, sont articulés sur la paroi de séparation (4) les éléments élastiques (8 9) qui rappellent chacun élastiquement essentiellement à partir d'une position angulaire prédéfinie, par pivotement manuel de la paroi de séparation (4) dans la position augmentant le volume de bagage cette paroi de séparation (4) dans la position augmentant du volume de bagage et par déplacement manuel de la paroi de séparation (4) dans la position de réception du capot cette paroi de séparation (4) dans la position de réception du capot.

3. Dispositif de séparation conforme à la revendication 1 ou 2,
**caractérisé en ce que**
lorsque la paroi de séparation (4) se trouve dans la position de réception du capot, les axes (14, 16) sont situés ou formés dans la zone inférieure de cette paroi de séparation (4).

4. Dispositif de séparation conforme à la revendication là 3,
**caractérisé en ce que**
la zone de bord de l'ouverture de passage (1) est limitée par une partie de cadre (20) qui s'étend sur la totalité de la périphérie ou au moins une partie de la périphérie de cette ouverture de passage (1), ou en outre, une garniture d'étanchéité est positionnée entre la partie de cadre (20) et une paroi de la carrosserie (21) comportant l'ouverture de passage (1) ou un cadre de renfort, ou entre le cadre de renfort et la paroi de la carrosserie comportant l'ouverture de passage.

5. Dispositif de séparation conforme à l'une des revendications 1 à 4,
**caractérisé en ce qu'**
est fixée, dans la zone de bord de l'ouverture de passage (1) ou sur la partie de cadre (20) qui y est fixée ou sur un cadre de renfort pouvant être relié à la partie de cadre ou à la zone de bord, un élément de sac de forme variable qui sépare de façon largement étanche à l'humidité le volume de bagages (2) du volume de réception du capot (3) et peut être déplacé au moins par zones par la paroi de séparation (4) lorsque cette paroi de séparation (4) est déplacée de la position de réception du capot à la position augmentant le volume de bagages, et, l'élément de sac s'appliquant ou venant en appui par zones sur la paroi de séparation (4).

6. Dispositif de séparation conforme à l'une des revendications 4 et 5,
**caractérisé en ce que**
la partie de cadre (1) s'étend sur la totalité de la périphérie de l'ouverture de passage (21) et comporte deux zones en forme de U (22, 23) opposées l'une à l'autre, l'une des zones en forme de U (22) étant essentiellement horizontale avec des branches (24, 25) dirigées vers l'arrière et l'autre zone en forme de U (23) ayant des branches (26, 27) dirigées vers le bas, ces branches (26, 27) étant reliées aux branches (24, 25) respectivement tournées vers celles-ci de la zone en forme de U horizontale (22).

7. Dispositif de séparation conforme à la revendication 6,
**caractérisé en ce que**
l'axe transversal du véhicule (5) est situé dans la zone de la base (31) de la zone en forme de U essentiellement verticale (23) de la partie de cadre (20), et dans la position de réception du capot la paroi de séparation (4) est située, essentiellement entre les branches essentiellement verticales (26, 27) de cette zone en forme de U (23) de la partie de cadre (20).

8. Dispositif de séparation conforme à l'une des revendications 1 à 7,
**caractérisé en ce que**
dans sa position de réception du capot et dans sa position augmentant le volume de bagages la paroi de séparation (4) s'applique, respectivement contre une butée fixe et est alternativement rappelée élastiquement par les éléments élastiques précontraints (8, 9) contre la butée concernée.

9. Dispositif de séparation conforme à l'une des revendications 1 à 8,
**caractérisé en ce que**
les éléments élastiques (8, 9) sont plans ou courbes, et lorsque la paroi de séparation (4) est dans la position de réception du capot les éléments élastiques (8, 9) s'étendent, avec leurs zones d'extrémité situées essentiellement à la même hauteur entre la zone de bord avant (30) de l'ouverture de passage (1) et la zone inférieure de la paroi de séparation (4) et sont courbés avec une convexité tournée vers le haut.

10. Dispositif de séparation conforme à l'une des revendications 1 à 9,
**caractérisé en ce que**
lorsque la paroi de séparation (4) est dans la position augmentant le volume de bagage essentiellement horizontale déplacée par pivotement vers le haut et vers l'avant les éléments élastiques (8, 9) sont courbés vers l'avant avec une convexité tournée vers le haut, ou en outre, dans cette position, les éléments élastiques (8, 9) sont plus fortement courbés que dans leur position, dans laquelle la paroi de séparation (4) est dans sa position de réception du capot.

11. Dispositif de séparation conforme à l'une des revendications 1 à 10,
**caractérisé en ce que**
dans la zone médiane inférieure de la paroi de séparation (4), située dans la position de réception du capot, est formée une cavité de préhension (32) qui permet une prise manuelle de la main d'un utilisateur dans celle-ci dans la position augmentant le volume de bagages de la paroi de séparation (4) et ainsi d'exercer une force de traction sur la paroi de séparation (4) par la main de l'utilisateur dans la direction de sa position de réception du capot.
